# EUROPÄISCHE PATENTANMELDUNG

(11) **EP 2 829 989 A1**
(43) Veröffentlichungstag der Anmeldung: **28.01.2015**
(21) Anmeldenummer: 14177661.7
(22) Anmeldetag: 18.07.2014
(51) Int. Cl.: G06F 13/40, H04L 25/02

(54) **Vorrichtung zum Anschluss eines Abschlusswiderstands**

(30) Priorität: 26.07.2013 JP 2013155829
(71) Anmelder: Sanyo Denki Co., Ltd., Tokyo 170-8451 (JP)
(72) Erfinder: Machida, Koichi, Tokyo, Tokyo (JP)
(74) Vertreter: Vossius & Partner

(57) **Zusammenfassung**

Die vorliegende Erfindung ermöglicht es, einen in einer Vorrichtung ausgeführten Abschlusswiderstand unter Verwendung eines in der Vorrichtung bereits vorhandenen Teils einfach an die Kommunikationsleitungen anzuschließen und von diesen zu trennen.

Gemäß der Erfindung schließt das Photorelais 164 den Abschlusswiderstand 162 zwischen den für die Kommunikation verwendeten Leitungen BUS_H und BUS_L an. Der Kontakt 166 des Drehschalters 155 gibt Ein- und Ausschaltsignal zum Ein-und Ausschalten des Photorelais' 164 ab. Als Kontakt 166 des Drehschalters 155 wird ein Kontakt 166 verwendet, der vom Drehschalter 155, welcher Kommunikationsadressen für den Servoverstärker 100 festlegen kann, nicht genutzt ist.

## Beschreibung

Die vorliegende Erfindung betrifft eine Vorrichtung zum Anschluss eines Abschlusswiderstands, welche es erlaubt, einen in einer Vorrichtung ausgeführten Abschlusswiderstand unter Verwendung eines in der Vorrichtung bereits vorhandenen Teils einfach an die Kommunikationsleitungen anzuschließen und von diesen zu trennen.

Herkömmlicherweise wird bei einem Differenzspannungen verwendenden CAN-Kommunikationssystem eine am Ende der CAN-Bus-Leitung befindlichen Vorrichtung (wie etwa ein Servoverstärker), wie in JP 2000-165415 A beschrieben, mit einem für die Kommunikation unerlässlichen Abschlusswiderstand verbunden.

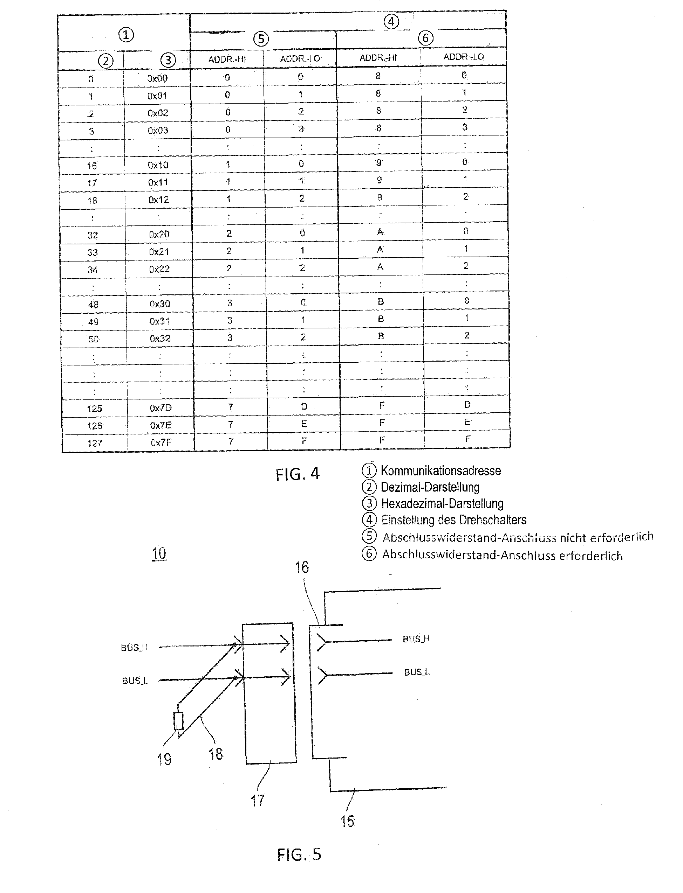

Die in Fig. 5 dargestellte Vorrichtung zum Anschluss eines Abschlusswiderstands 10 ist in folgender Weise aufgebaut: Am Gehäuse eines Servoverstärkers 15 ist ein servoverstärkerseitiger Stecker 16 angebracht. Mit dem servoverstärkerseitigen Stecker 16 wird ein kommunikationsleitungseitiger Stecker 17 verbunden. Wenn der servoverstärkerseitige Stecker 16 mit dem kommunikationsleitungseitigen Stecker 17 verbunden ist, sind der servoverstärkerseitige und der kommunikationsleitungseitige BUS_H und BUS_L miteinander verbunden. In der Vorrichtung zum Anschluss des Abschlusswiderstands 10 ist im Servoverstärker 15 kein Abschlusswiderstand eingebaut, deshalb ist zwischen den kommunikationsseitigen Bussen, BUS_H und BUS_L, eine getrennte Leitung 18 herausgeführt und an diese Leitung 18 wird ein Abschlusswiderstand 19 angeschlossen.

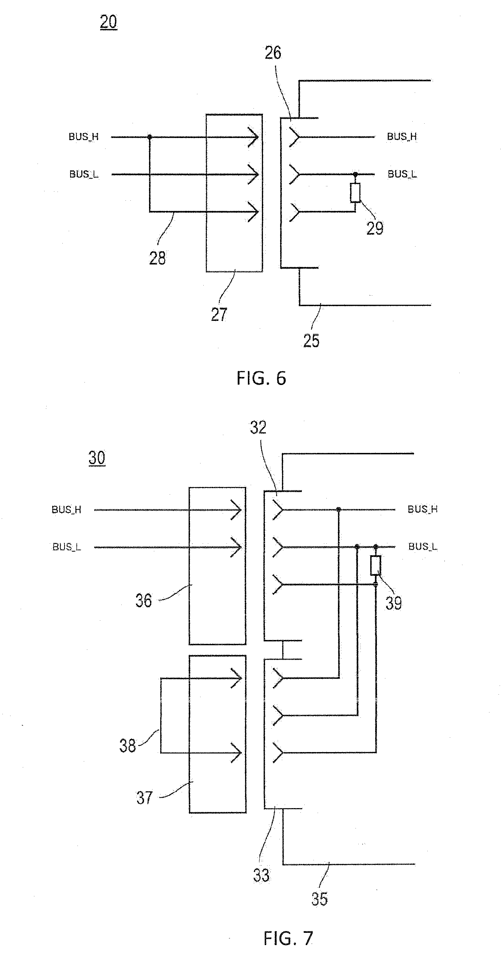

Die in Fig.6 dargestellte Vorrichtung zum Anschluss eines Abschlusswiderstands 20 ist in folgender Weise aufgebaut: Am Gehäuse eines Servoverstärkers 25 ist ein servoverstärkerseitiger Stecker 26 angebracht. Zwischen einem Kontakt des servoverstärkerseitigen Steckers 26 und dem servoverstärkerseitigen BUS_L ist ein Abschlusswiderstand 29 angeschlossen. In allen Servoverstärkern 25 ist ein Abschlusswiderstand 29 eingebaut. Bei dem kommunikationsleitungseitigen Stecker 27 sind der kommunikationsleitungseitige BUS_H und ein Kontakt des kommunikationsleitungseitigen Steckers 27 mittels einer Leitung 28 miteinander verbunden.

Wenn der servoverstärkerseitige Stecker 26 mit dem kommunikationsleitungseitigen Stecker 27 verbunden wird, werden die kommunikationsleitungseitigen Busse und die servoverstärkerseitigen Busse, BUS_H und BUS_L, miteinander verbunden. Darüber hinaus werden ein Kontakt des servoverstärkerseitigen Steckers 26 und ein des kommunikationsleitungseitigen Steckers 27 miteinander verbunden. Allein durch die Verbindung des servoverstärkerseitigen Steckers 26 mit dem kommunikationsleitungseitigen Stecker 27 wird daher der Abschlusswiderstand 29 zwischen dem kommunikationsleitungseitigen BUS_H und dem servoverstärkerseitigen BUS_L angeschlossen.

Die in Fig. 7 dargestellte Vorrichtung zum Anschluss eines Abschlusswiderstands 30 ist in folgender Weise aufgebaut: am Gehäuse eines Servoverstärkers 35 sind ein erster servoverstärkerseitiger Stecker 32 und ein zweiter servoverstärkerseitiger Stecker 33 angebracht. Der erste servoverstärkerseitige Stecker 32 wird mit einem ersten kommunikationsleitungseitigen Stecker 36 verbunden. Wenn der erste servoverstärkerseitige Stecker 32 mit einem ersten kommunikationsleitungseitigen Stecker 36 verbunden ist, sind der kommunikationsleitungseitige und der servoverstärkerseitigen BUS_H und BUS_L miteinander verbunden. Zwischen einem Kontakt des servoverstärkerseitigen ersten Steckers 32 und dem servoverstärkerseitigen BUS_L ist ein Abschlusswiderstand 39 angeschlossen. In allen Servoverstärkern 35 ist ein Abschlusswiderstand 39 eingebaut.

Beim zweiten kommunikationsleitungseitigen Stecker 37 ist eine Leitung 38 vorgesehen, welche den servoverstärkerseitigen BUS_H und den servoverstärkerseitigen BUS_L, an die der Abschlusswiderstand 39 angeschlossen wird, verbindet. Wenn der zweite servoverstärkerseitige Stecker 33 mit dem zweiten kommunikationsleitungseitigen Stecker 37 verbunden wird, werden mittels der Leitung 38 der servoverstärkerseitige BUS_H und BUS_L, an die der Abschlusswiderstand 39 angeschlossen wird, verbunden und der Abschlusswiderstand 39 ist zwischen den servoverstärkerseitigen Bussen, BUS_H und BUS_L, angeschlossen. Auch bei der Vorrichtung zum Anschluss eines Abschlusswiderstands 30 wird, wie bei der Vorrichtung zum Anschluss eines Abschlusswiderstands 20, allein durch die Verbindung des zweiten servoverstärkerseitigen Steckers 33 mit dem zweiten kommunikationsleitungseitigen Steckers 37, der Abschlusswiderstand 39 zwischen den servoverstärkerseitigen Bussen, BUS_H und BUS_L,angeschlossen.

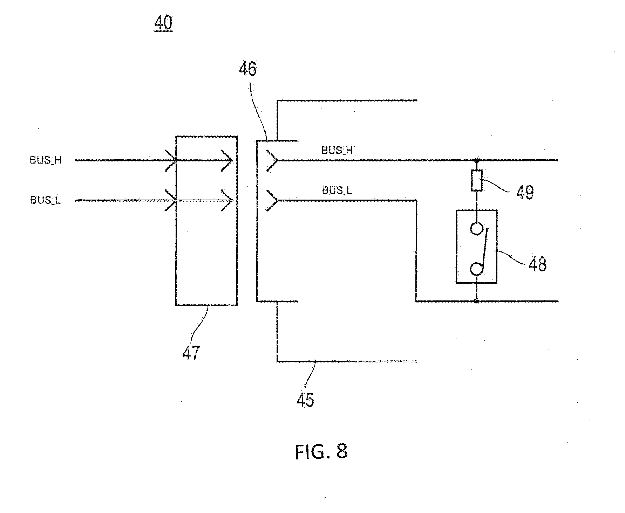

Die in Fig. 8 dargestellte Vorrichtung zum Anschluss eines Abschlusswiderstands 40 ist in folgender Weise aufgebaut: Am Gehäuse eines Servoverstärkers 45 ist ein servoverstärkerseitiger Stecker 46 angebracht. Der servoverstärkerseitige Stecker 46 wird mit einem kommunikationsleitungseitigen Stecker 47 verbunden. Wenn der servoverstärkerseitige Stecker 46 mit dem kommunikationsleitungseitigen Stecker 47 verbunden wird, werden die kommunikationsseitigen Busse und die servoverstärkerseitigen Busse, BUS_H und BUS_L, miteinander verbunden. Zwischen den servoverstärkerseitigen Bussen, BUS_H und BUS_L, sind ein DIP-Schalter 48 und ein Abschlusswiderstand 49 seriell angeschlossen.

Der DIP-Schalter 48 ist am Gehäuse des Servoverstärkers 45 angebracht. Wenn ein Servoverstärker 45 am Ende angeschlossen ist, wird der DIP-Schalter 48 eingeschaltet. Wenn der DIP-Schalter 48 eingeschaltet wird, wird der Abschlusswiderstand 49 zwischen den servoverstärkerseitigen Bussen, BUS_H und BUS_L, angeschlossen.

Die oben genannten herkömmlichen Vorrichtungen zur Verbindung eines Abschlusswiderstands weisen aber folgende Probleme auf.

Wenn, wie in Fig. 5 dargestellt, kein Abschlusswiderstand im Servoverstärker eingebaut ist, muss der Nutzer bei der Einrichtung eines Servoverstärkers diesen bereitstellen und die Leitung zum Anschluss des Abschlusswiderstands an den kommunikationsseitigen Stecker verlegen. Der Nutzer ist daher gezwungen, die Kosten für die Teile zu tragen und eine Leitung zu verlegen. Da ein Platz für den Abschlusswiderstand außerhalb des Servoverstärkers benötigt wird, gibt es Risikos, wie etwa eine Beschädigung und Loslösung des Abschlusswiderstands.

Wenn, wie in Fig. 6 und 7 dargestellt, ein Abschlusswiderstand im Servoverstärker eingebaut ist, ist es erforderlich, bei dem kommunikationsseitigen Stecker einen Kontakt für einen Abschlusswiderstand auszuführen oder einen zusätzlichen kommunikationsleitungseitigen Stecker für den Abschlusswiderstand anzuordnen. Daher wird ein kommunikationsleitungseitiger Stecker zum Anschluss des Abschlusswiderstands benötigt und der Nutzer ist gezwungen, die Kosten für die Teile zu tragen und Verbindungsarbeiten zu verrichten.

Wenn, wie in Fig. 8 dargestellt, der im Servoverstärker eingebaute Abschlusswiderstand mittels eines DIP-Schalters angeschlossen wird, muss der DIP-Schalter zur leichten Bedienung des Nutzers an der Frontseite des Gehäuses des Servoverstärkers angeordnet sein. Aufgrund der Forderung nach Verkleinerung in den letzten Jahren ist es schwierig, am Gehäuse des Servoverstärkers einen Platz für einen DIP-Schalter zu finden.

Die vorliegende Erfindung wurde getätigt, um die genannten Probleme der herkömmlichen Technologie zu beseitigen und setzt sich zum Ziel, eine Vorrichtung zum Anschluss eines Abschlusswiderstands zur Verfügung zu stellen, welche es erlaubt, einen in einer Vorrichtung ausgeführten Abschlusswiderstand unter Verwendung eines in der Vorrichtung bereits vorhandenen Teils einfach an die Kommunikationsleitungen anzuschließen und von diesen zu trennen. Die genannten Probleme werden durch die in den Patentansprüchen angeführten Merkmale gelöst.

Gemäß der vorliegenden Erfindung ist eine Vorrichtung zum Anschluss eines für die Kommunikation verwendeten und in der Vorrichtung bereits eingebauten Abschlusswiderstands, mit einem Verbindungsteil und einem Signalausgangsteil ausgestattet.

Die erfindungsgemäße Vorrichtung schließt einen Abschlusswiderstand zwischen den für die Kommunikation verwendeten Leitungen an. Das erfindungsgemäße Signalausgangsteil gibt ein Einschaltsignal bzw. Ausschaltsignal ab, welches das Verbindungsteil ein- und ausschaltet. Für das erfindungsgemäße Signalausgangsteil wird darüber hinaus ein bereits vorhandenes Teil mitverwendet, welches geeignet ist, der Vorrichtung eine weitere Funktion hinzufügen.

Daher wird gemäß der vorliegenden Erfindung das Verbindungsteil eingeschaltet, wenn das Signalausgangsteil ein Einschaltsignal abgibt, und der Abschlusswiderstand wird an die für die Kommunikation verwendeten Leitungen angeschlossen. Wenn andererseits das Signalausgangsteil ein Ausschaltsignal abgibt, wird das Verbindungsteil ausgeschaltet und der Abschlusswiderstand wird von den für die Kommunikation verwendeten Leitungen getrennt.

Vorteilhafte Ausführungsformen der vorliegenden Erfindung sind in den abhängigen Ansprüchen beschrieben.

Gemäß der Vorrichtung zum Anschluss eines Abschlusswiderstands der vorliegenden Erfindung kann ein Abschlusswiderstand unter Verwendung des Signals, das von einem in der Vorrichtung bereits vorhanden Signalausgangsteil abgegebenen wird, zwischen den Leitungen , die für die Kommunikation verwendet werden, angeschlossen oder von diesen getrennt werden.

Es ist daher nicht mehr erforderlich, ein Signalverbindungsteil zum Anschluss des Abschlusswiderstands in der Vorrichtung vorzusehen. Durch eine Operation des Signalausgangsteils, welches in der Vorrichtung bereits vorhanden ist, kann der Abschlusswiderstand einfach angeschlossen oder getrennt werden.

Daher erfüllt die Vorrichtung die Forderung nach Platzeinsparung und der Aufwand zum Anschluss des Abschlusswiderstands durch den Nutzer ist geringer.

Die vorliegende Erfindung wird an Hand von Figuren ausführlich erläutert.
Fig. 1 ist eine frontale Ansicht eines Servoverstärkers, welcher mit einer erfindungsgemäßen Vorrichtung zum Anschluss eines Abschlusswiderstands ausgestattet ist.
Fig. 2 ist eine Darstellung des Aufbaus des Bereichs um die Drehschalter des Servoverstärkers gemäß Fig. 1.
Fig. 3 ist eine Darstellung des Aufbaus einer erfindungsgemäßen Vorrichtung zum Anschluss eines Abschlusswiderstands.
Fig. 4 ist eine Ansicht zur Erläuterung der Signale, die abhängig von der Einstellposition des Drehschalters gemäß Fig. 2 abgegeben werden.
Fig. 5 ist eine Darstellung des Aufbaus einer herkömmlichen Vorrichtung zum Anschluss eines Abschlusswiderstands.
Fig. 6 ist eine Darstellung des Aufbaus einer herkömmlichen Vorrichtung zum Anschluss eines Abschlusswiderstands.
Fig. 7 ist eine Darstellung des Aufbaus einer herkömmlichen Vorrichtung zum Anschluss eines Abschlusswiderstands.
Fig. 8 ist eine Darstellung des Aufbaus einer herkömmlichen Vorrichtung zum Anschluss eines Abschlusswiderstands.

### [Aufbau einer Vorrichtung zum Anschluss eines Abschlusswiderstands]

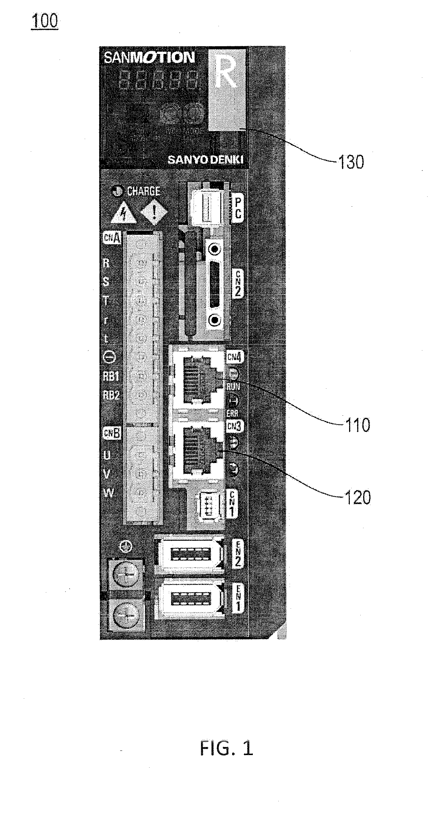

Fig. 1 ist eine frontale Ansicht eines Servoverstärkers, welcher mit einer erfindungsgemäßen Vorrichtung zum Anschluss eines Abschlusswiderstands ausgestattet ist. Der Servoverstärker 100 (Vorrichtung) wird z.B. verwendet, um einen Motor einer Werkzeugmaschine zu steuern. Wenn eine Werkzeugmaschine mehrere Motoren besitzt, müssen korrespondierend mit den Motoren Servoverstärker 100 vorgesehen werden. Daher werden die einzelnen Servoverstärker 100 unter Verwendung von an ihrer Frontseite ausgeführten Verbindungssteckern 110, 120 in Daisy-Chain-Schaltung verbunden.

In allen Servoverstärkern 100 ist ein Abschlusswiderstand eingebaut, welcher für die Kommunikation zwischen den Servoverstärkern 100 unerlässlich ist. Wenn mehrere Servoverstärker 100 in Daisy-Chain-Schaltung verbunden werden, ist es nicht nötig, den Abschlusswiderstand eines Servoverstärkers 100, der sich in einer Zwischenposition an den für die Kommunikation verwendeten Leitungen befindet, an die Leitungen anzuschließen. Aber die Abschlusswiderstände jener ein bzw. zwei Servoverstärker 100, die sich am Ende der Leitungen befinden, müssen an die Leitungen angeschlossen werden. Die erfindungsgemäße Vorrichtung zum Anschluss eines Abschlusswiderstands ermöglicht einen leichten Anschluss eines Abschlusswiderstands an die Leitungen.

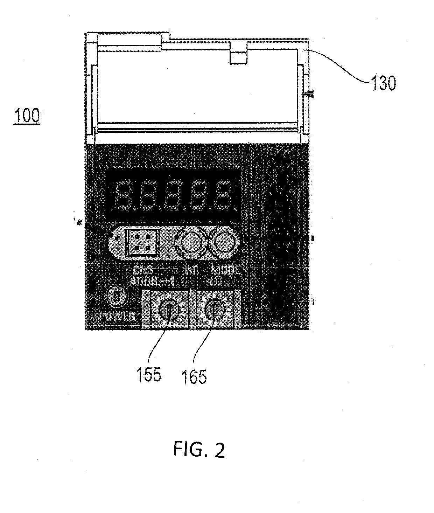

Fig. 2 ist eine Darstellung des Aufbaus des Bereichs um die Drehschalter des Servoverstärkers gemäß der Fig. 1. Wie in Fig. 1 dargestellt, ist auf dem oberen Bereich der Frontseite des Servoverstärkers 100 ein Deckel 130 ausgeführt. Wenn der Deckel 130 geöffnet wird, sind zwei wie in Fig. 2 dargestellte Drehschalter 155, 165 angeordnet.

Die Drehschalter 155 und 165 sind Drehschalter mit vier Kontakten, welche für die im Servoverstärker 100 eingebaute CPU (nicht abgebildet) Kommunikationsadressen festlegen können. Der Drehschalter 155 ist zur Festlegung der höherwertigen Adressen und der Drehschalter 165 ist zur Festlegung der niederwertigen Adressen.

Bei der erfindungsgemäßen Vorrichtung zum Anschluss eines Abschlusswiderstands wird der Abschlusswiderstand, unter Verwendung eines unbelegten und für die Festlegung von Kommunikationsadressen nicht verwendeten Kontakts des Drehschalters 155, an die für die Kommunikation verwendeten Leitungen angeschlossen bzw. von diesen getrennt.

Der Drehschalter 155 hat daher sowohl die Funktion der Festlegung von Kommunikationsadressen als auch die Funktion, den Abschlusswiderstand an die für die Kommunikation verwendeten Leitungen anzuschließen bzw. von diesen zu trennen. Der Drehschalter 155 ist ein bereits vorhandenes Teil, das für einen Servoverstärker 100 unerlässlich ist.

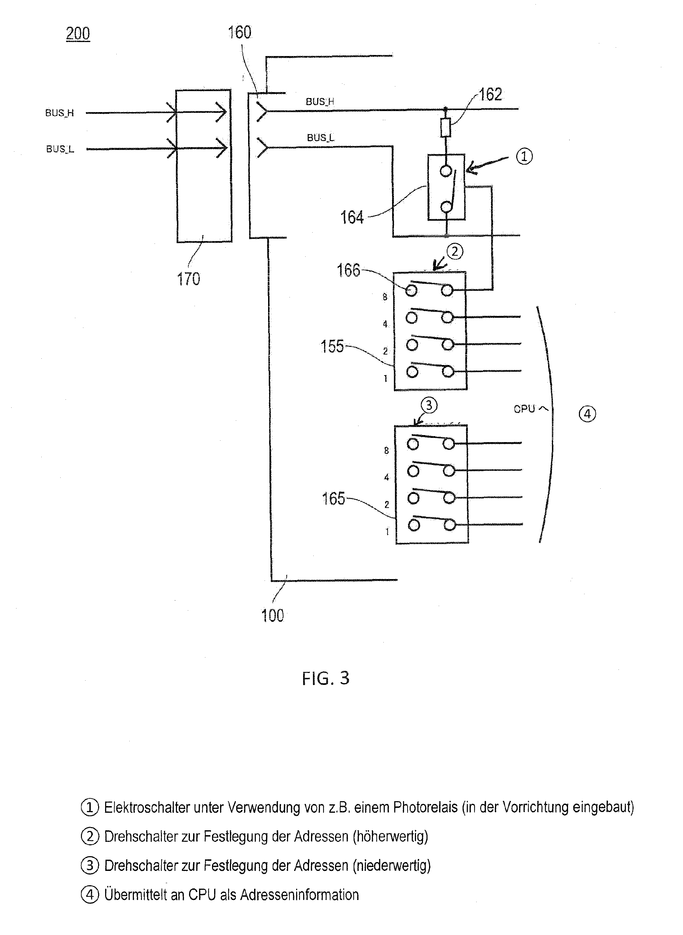

Fig. 3 ist eine Darstellung des Aufbaus einer erfindungsgemäßen Vorrichtung zum Anschluss eines Abschlusswiderstands. Die in Fig. 3 dargestellte Vorrichtung zum Anschluss eines Abschlusswiderstands 200 ist folgendermaßen aufgebaut. Am Gehäuse des Servoverstärkers 100 ist ein servoverstärkerseitiger Stecker 160 angebracht. Mit dem servoverstärkerseitigen Stecker 160 wird ein kommunikationsleitungseitiger Stecker 170 verbunden.

Mit dem servoverstärkerseitigen Stecker 160 sind BUS_H und BUS_L als für die Kommunikation verwendete Leitungen verbunden. Mit der Leitung BUS_H ist ein Ende des Abschlusswiderstands 162 verbunden. Mit der Leitung BUS_L wird ein Ende eines Photorelais' 164 (Verbindungsteil), welches im Servoverstärker 100 bereits ausgeführt ist, verbunden. Ein anderes Ende des Abschlusswiderstands 162 und ein anderes Ende des Photorelais 164 werden miteinander direkt verbunden. Daher sind zwischen den Leitungen BUS_H und BUS_L der Abschlusswiderstand 162 sowie das Photorelais 164 seriell angeschlossen.

Das Photorelais 164 wird mit einem unbelegten und für die Festlegung von Kommunikationsadressen nicht verwendeten Kontakt 166 (Signalausgangsteil) des Drehschalters 155 verbunden. Alle Kontakte des Drehschalters 155, mit Ausnahme des Kontakts 166, sowie alle Kontakte des Drehschalters 165 sind mit der hier nicht abgebildeten CPU, welche im Servoverstärker ausgeführt ist, verbunden.

Mit dem kommunikationsleitungseitigen Stecker 170 sind BUS_H und BUS_L als für die Kommunikation verwendeten Leitungen verbunden. Wenn mit dem servoverstärkerseitigen Stecker 160 der kommunikationsleitungseitigen Stecker 170 verbunden wird, werden die kommunikationsleitungseitigen Busse und servoverstärkerseitige Busse, BUS_H und BUS_L, miteinander verbunden.

Fig. 4 ist eine Ansicht zur Erläuterung der Signale, die abhängig von der Einstellposition des Drehschalters gemäß Fig. 2 abgegeben werden. Die Drehschalter 155 und 165 können je nach Einstellposition die in der Fig. angeführten 128 unterschiedlichen Kommunikationsadressen festlegen.

Wie in der Fig. dargestellt, werden Kommunikationsadressen durch Ein- und Ausschalten von 7 Kontakten des Drehschalters 155 und 165 festgelegt, ohne den Kontakt 166 des Drehschalters 155 zu verwenden (bleibt geöffnet), wenn der Abschlusswiderstand 162 nicht angeschlossen werden muss (Abschlusswiderstand-Anschluss nicht erforderlich).

Wenn z.B. die Kommunikationsadresse "16" in Dezimal-Darstellung festgelegt wird, wird 1 mittels des Drehschalters 155 (ADDR-HI) und 0 mittels des Drehschalters 165 (ADDR-LO) eingestellt. Wenn die Kommunikationsadresse "33" in Dezimal-Darstellung festgelegt wird, wird 2 mittels des Drehschalters 155 (ADDR-HI) und 1 mittels des Drehschalters 165 (ADDR-LO) eingestellt. Wenn ferner die Kommunikationsadresse "126" in Dezimal-Darstellung festgelegt wird, wird 7 mittels des Drehschalters 155 (ADDR-HI) und E mittels des Drehschalters 165 (ADDR-LO) eingestellt.

Andrerseits werden, wie in der Fig. dargestellt, Kommunikationsadressen durch Ein- und Ausschalten von 7 Kontakten des Drehschalters 155 und 165, unter ständiger Verwendung des Kontakts 166 des Drehschalters 155 (bleibt geschlossen), festgelegt, wenn der Abschlusswiderstand 162 angeschlossen werden muss (Abschlusswiderstand-Anschluss erforderlich).

Wenn z.B. die Kommunikationsadresse "16" in Dezimal-Darstellung festgelegt wird, wird 9 mittels des Drehschalters 155 (ADDR-HI) und 0 mittels des Drehschalters 165 (ADDR-LO) eingestellt. Wenn die Kommunikationsadresse "33" in Dezimal-Darstellung festgelegt wird, wird A mittels des Drehschalters 155 (ADDR-HI) und 1 mittels des Drehschalters 165 (ADDR-LO) eingestellt. Wenn ferner die Kommunikationsadresse "126" in Dezimal-Darstellung festgelegt wird, wird F mittels des Drehschalters 155 (ADDR-HI) und E mittels des Drehschalters 165 (ADDR-LO) eingestellt.

### [Funktionsweise der Vorrichtung zum Anschluss eines Abschlusswiderstands]

Wenn sich ein in Fig. 1 dargestellter Servoverstärker 100 in einer Zwischenposition der Leitung befindet, erfolgt die Festlegung der Kommunikationsadressen, wie in der Spalte "Abschlusswiderstand-Anschluss nicht erforderlich" in der Fig. 4 angegeben, so dass der Kontakt 166 (siehe Fig. 3) des Dreheschalters 155 des Servoverstärkers 100 stets offen ist.

Wenn z.B. die Kommunikationsadresse "16" in der Dezimal-Darstellung festgelegt wird, wird 1 mittels des Drehschalters 155 (ADDR-HI) und 0 mittels des Drehschalters 165 (ADDR-LO) eingestellt.

In diesem Fall erfolgt die Festlegung der Kommunikationsadresse während der Kontakt 166 des Drehschalters 155 offen ist. Daher wird vom Drehschalter 155 ein Ausschaltsignal abgegeben und das Photorelais 164 ausgeschaltet, wodurch der Abschlusswiderstand 162 von den Leitungen BUS_H und BUS_L getrennt wird.

Wenn sich andererseits der in Fig. 1 dargestellte Servoverstärker 100 am Ende der Leitung befindet, erfolgt die Festlegung der Kommunikationsadressen wie in der Spalte "Abschlusswiderstand-Anschluss erforderlich" der Fig. 4, während der Kontakt 166 (siehe Fig. 3) des Drehschalters 155 des Servoverstärkers 100 stets verbunden ist.

Wenn z.B. die Kommunikationsadresse "16" in Dezimal-Darstellung festgelegt wird, wird 9 mittels des Drehschalters 155 (ADDR-HI) und 0 mittels des Drehschalters 165 (ADDR-LO) eingestellt.

In diesem Fall erfolgt die Festlegung der Kommunikationsadressen während der Kontakt 166 des Drehschalters 155 verbunden ist. Daher wird vom Drehschalter 155 ein Einschaltsignal abgegeben und das Photorelais eingeschaltet, wodurch der Abschlusswiderstand 162 an die Leitungen BUS_H und BUS_L angeschlossen wird.

Gemäß der erfindungsgemäßen Vorrichtung zum Anschluss eines Abschlusswiderstands 200 wird nämlich der Kontakt 166 des Drehschalters 155 stets offen sein, wenn der Servoverstärker 100 sich in einer Zwischenposition der Leitung befindet, und der Kontakt 166 des Drehschalters 155 wird stets verbunden sein, wenn sich der Servoverstärker 100 am Ende einer Leitung befindet.

Der Kontakt 166 des Drehschalters 155 ist für die Festlegung der Kommunikationsadressen nicht erforderlich. Bei einer erfindungsgemäßen Vorrichtung zum Anschluss eines Abschlusswiderstands 200 erfolgt der Anschluss des Abschlusswiderstands 162 an die Leitungen und Trennung des Abschlusswiderstands von diesen durch Nutzung des ungenutzten, unbelegten Kontakts 166.

Wie oben erläutert, ist es gemäß der erfindungsgemäßen Vorrichtung zum Anschluss eines Abschlusswiderstands 200 nicht mehr erforderlich, den Servoverstärker 100 mit einem Teil zum Anschluss eines Abschlusswiderstands neu auszustatten. Durch die Bedienung des Drehschalters 155, welcher am Servoverstärker 100 als bestehendes Teil bereits vorhanden ist, ist es möglich, den Abschlusswiderstand leicht anzuschließen und zu trennen. Daher kann die Forderung nach Platzeinsparung durch den Servoverstärker 100 erfüllt werden und der Aufwand zum Anschluss des Abschlusswiderstands 162 durch den Nutzer ist geringer.

Bei der vorliegenden Erfindung wurde als Beispiel für die Vorrichtung ein Servoverstärker 100 angeführt, sie ist jedoch auch auf andere Vorrichtungen als einen Servoverstärker anwendbar, solange es sich um solche Vorrichtungen handelt, welche die Funktion des Anschließens und Trennens eines Abschlusswiderstands benötigen.

Als Beispiel für ein Verbindungsteil wurde ferner ein Photorelais 164 angeführt, es können jedoch auch ein mechanisches Relais wie ein elektromagnetisches Relais oder ein elektrischer Elektroschalter wie ein Leistungstransistor verwendet werden.

Als Beispiel für ein Signalausgangsteil wurde ferner ein Kontakt 164 eines Drehschalters 155 angeführt, es ist jedoch auch möglich, dass die im Servoverstärker 100 eingebaute CPU die Einstellposition des Drehschalters 155 einließt und das Photorelais 166 ein- und ausschaltet.

Im Folgenden werden die in der obigen Beschreibung verwendeten, für die vorliegende Erfindung relevanten Bezugszeichen angeführt:
- 100: Servoverstärker (Vorrichtung)
- 155, 165: Drehschalter (Signalausgangsteil)
- 160: Servoverstärkerseitiger Stecker
- 162: Abschlusswiderstand
- 164: Photorelais (Verbindungsteil)
- 166: Kontakt (Signalausgangsteil)
- 170: Kommunikationsleitungseitiger Stecker
- 200: Vorrichtung zum Anschluss eines Abschlusswiderstands

## Patentansprüche

1. Vorrichtung zum Anschluss eines Abschlusswiderstands, bei welcher Vorrichtung ein für die Kommunikation verwendeter Abschlusswiderstand eingebaut ist,
**dadurch gekennzeichnet, dass** die Vorrichtung
mit einem Verbindungsteil, das den genannten Abschlusswiderstand zwischen den für die genannte Kommunikation verwendeten Leitungen anschließt,
und einem Signalausgangsteil, das ein Einschaltsignal bzw. Ausschaltsignal abgibt, welches das genannte Verbindungsteil ein- und ausschaltet,
vorgesehen ist, wobei
das genannte Signalausgangsteil ein bereits bestehendes Teil mitverwendet, welches geeignet ist, der genannten Vorrichtung eine weitere Funktion hinzuzufügen.

2. Vorrichtung zum Anschluss eines Abschlusswiderstands gemäß Anspruch 1, **dadurch gekennzeichnet,**
**dass** es sich beim genannten Verbindungsteil um ein mechanisches Relais oder einen elektrischen Elektroschalter handelt.

3. Vorrichtung zum Anschluss eines Abschlusswiderstands gemäß Anspruch 1 oder 2, **dadurch gekennzeichnet,**
**dass** es sich beim genannten Signalausgangsteil um einen in der Vorrichtung ausgeführten Drehschalter und einen Computer handelt.

4. Vorrichtung zum Anschluss eines Abschlusswiderstands gemäß einem der Ansprüche 1 bis 3, **dadurch gekennzeichnet,**
**dass** es sich bei der genannten weiteren Funktion um die Festlegung der Kommunikationsadressen handelt.
